# EUROPEAN PATENT APPLICATION

(11) **EP 1 952 962 A1**
(43) Date of publication of application: **06.08.2008**
(21) Application number: 07425051.5
(22) Date of filing: 31.01.2007
(51) Int. Cl.: B29C 43/22, B29C 59/04

(54) **Process and line for the continuous production of foils in thermoplastic material**

(71) Applicant: Apparecchiature Macchine Utensili S.p.A., 28040 Marano Ticino NO (IT)
(72) Inventor: Mina, Marco, 28040 Marano Ticino (NO) (IT); Monestier, Marco, 28040 Marano Ticino (NO) (IT)
(74) Representative: Valentini, Giuliano

(57) **Abstract**

The present invention relates to a process and relative plant for the continuous production of thermoplastic material embossed foils, in which the embossing step is carried out on the hot extruded material, prior to cooling.

## Description

The present invention relates to a process and relative plant for the continuous production of thermoplastic material foils.

Plants intended for the continuous production of thermoplastic material foils, and films to be used as a coating for surfaces and/or edges, for example in the furniture industry and other artefacts, generally where surface protection and/or aesthetical features of the end product have to be achieved, have been available for a long time. Generally, the foils or plates intended for this use have a pattern or surface finishing achieved by means of one or more embossing steps preceding the printing or final aesthetic lacquering steps.

For example, where the foils are intended for the furnishing industry, the pattern may reproduce wood grains or a decoration, both of a geometrical and a random nature, thus obtaining a modification of the aesthetical surface of materials which are smooth and/or satin per se.

The process typically used for the continuous production of foils and plates, or, in equivalent terms, films, provides a first number of operations comprising the hot extrusion of the thermoplastic material, the subsequent cooling on calendering plants and the winding in the form of bobbins. The sequence is carried out in conventional plants provided with an extruder, for example a single-screw, or a twin-screw, counter-rotating or co-rotating extruder, of finishing/cooling calenders, and of one or more assemblies for the cool winding of the foils in the form of bobbins having a predetermined length and/or diameter.

The aesthetical finishing of the foils is performed with a second sequence of operations comprising bobbin unwinding, heating of the material to a temperature corresponding to, or al least near, that of the surface tempering of the base polymer, embossing, subsequent cooling of the material to temperatures near the ambient ones, and finally rewinding of the embossed product in standard bobbins designed for the subsequent operations.

Said second sequence takes place by means of the following assemblies: an assembly of pulling rolls to unwind the bobbins of preformed foils, a heating assembly of the surface thereof until softening the material, an embossing assembly comprising one or more engraved rolls, i.e. provided with surface negative pattern compared to the end product, and corresponding counter-rolls suitable to support the engraving pressures, an assembly for cooling the material following the embossing, a pulling assembly and an assembly for the final winding onto bobbins of the embossed foils.

The rolls destined to the embossing have a pattern or a surface design usually achieved by mechanical engraving of the relative surface and intended to be impressed on the foils being worked. The moving foils are then compressed between the embossing rolls and the relative counter-rolls.

The conventional processes used to make embossed foils and/or plates, or equivalently embossed films, have a sequence of critical points related to the type of currently available plants and that can be briefly summarised in the following main points:
a) considerable power costs linked both to pre-heating/conditioning steps and materials and next cooling/post-engraving stabilization step;
b) a processing rate strictly related to the plant size, which in any case has to be suitable for the product residing times in both the heating and the cooling steps;
c) process discontinuity related to the need of performing bobbin replacements both in the unwinding step of the base product and rewinding step of the end product;
d) production scraps linked to the heads and the tails of the process relative to the bobbin replacements and the indispensable interruptions.

The sequence of production steps allowed by the current technologies involves, in addition to the other aspects cited above at points b), c), and d), a clear power waste, basically of electric power, related to the sequential steps of extrusion - calendering - cooling/stabilization - winding - unwinding
- subsequent second heating - embossing - cooling/stabilization - final winding.

Accordingly, the conventional plants and relative processes require high energy consumption, both global and specific, per unitary amount of end product, while the need to optimize the energy consumptions and the consequent considerable costs has been increasingly felt for a long time.

As an alternative to the previously described processes, a different technology has been known and applied for a long time now, which is based on the use of calendering rolls engraved by a process which is identical and/or similar to that of the previously cited embossing rolls.

This technology clearly allows saving energy as regards the sequence of steps as listed before, but it nonetheless has some drawbacks mainly due to the following points:
a) high cost of the engraving operations, related to the dimensions necessarily larger of the rolls which have to perform not only the embossing function, but also and especially the calendering function;
b) high cost of the calendering roll related to the structure, both mechanical and of flow profile of the diathermic fluid for the thermo-adjustment of the calendering operations;
c) the need to meet the roll/s diameter dimensions related not to the nature of the finishing aesthetical pattern, but to the typology and/or structure of the working calender;
d) very long times and methods for replacing the roll and which necessarily involve stopping the entire plant;
e) great difficulty in adjusting the embossing depth, the pattern on the roll being equal, when required by particular aesthetic needs, as the calendering step must be however ensured on the material being processed.

In addition to the productive aspects set forth above, a further drawback of the conventional processes and plants is that the quality of the end product, i.e. the quality of embossed foils, can be deeply affected by the inner tensions of the thermoplastic material that are created by the sequence of the thermal cycles. In particular, when the surface of the material of the foil being worked is heated and brought to the softening temperature, prior to the embossing step, inner tensions are created between the hot surface to be embossed and the inner portion of the foil (mass of material being worked), which usually remains at a considerably lower temperature in order to allow pulling the latter.

Said inner tensions can easily cause undesired changes in the dimensional stability of the end product, or alter its physical-mechanical features required for end use or even, in the worst cases, when highly thermosensitive polymers are used, cause such embrittlements as to origin an early rupture of the foil during the winding step.

The object of the present invention is to provide a process and relative plant for the continuous production of thermoplastic material foils, plates, and films which solve in a simple, efficient, and economic manner the drawbacks of the conventional types of process as set forth above, thus allowing a sensible productivity increase, while resulting inexpensive to manufacture.

A further object of the present invention is to provide a process and relative plant for the continuous production of thermoplastic material foils, and films which allows adjusting, precisely and with real ease, the embossing degree of the foil being worked, thus decreasing the number of replacements of the embossing roll.

It is still another object of the present invention to provide a process and relative plant for the continuous production of thermoplastic material foils, and films, which allows to gain a sensible energy saving as compared with the known solutions, while allowing maximizing the end product quality, both in terms of esthetical appearance and physical-mechanical features.

These and other objects are achieved by the present invention, which relates to a process for the continuous production of thermoplastic material foils, and films according to claim 1.

The invention relates to the continuous production of embossed films, foils, and plates made of thermoplastic material, opposed to batch production.

By "foil" it is meant to denote a weblike product, independently of the width thereof, for example a film, etc., having a thickness ranging between a few tenths of millimetre and 4 mm, in any case, capable to be produced in a wound form, whereas the term "plate" is directed to products made of rigid thermoplastic materials having thicknesses of more than 4 mm.

In particular, the process comprises the step of continuous hot extrusion of a thermoplastic material product, the step of thermo-conditioning the same material to the subsequent - both partial and total - embossing of the foil, film, or plate, and it is characterized in that the embossing step is carried out on the extruded material when hot, prior to cooling at room temperature or at least at a temperature suitable for winding the product under thermal stability conditions.

Advantageously, the embossing step is performed on the thermoplastic material foil immediately after the extrusion of the latter, when the foil material is at a temperature near the extrusion temperature. Therefore, in summary, the foil does not undergo a substantial cooling before being embossed, contrarily to what is provided in the conventional processes, but it undergoes an embossing, for example by means of a special assembly comprising an embossing roll and the relative counter-roll, when the thermoplastic material is still hot. The thermal energy required to accomplish the process according to the present invention is greatly lower, the other conditions being the same, compared to what provided for by the known solutions.

Preferably the thermoplastic material foil (LDPE, HDPE, HIPS, GPSS/SBS, ABS, EVA, PU, PET, R/PVC, S/PVC, PMMA, etc.) is subjected to one or more calendering steps prior to the embossing step. The calendering may be operated with special rolls which, in a plant according to the present invention, are located upstream the embossing assembly relative to the feeding direction of the foil being worked. The calendering is carried out at a controlled temperature on the material in a "melt" state coming from the plane head being connected to an extruder.

The process can provide for a tempering step of the foil surface to be embossed, accomplished prior to the embossing step, with the aim of bringing at least a part of the foil surface back to a temperature near the softening temperature of the specific thermoplastic processed material, for example in case the cooling step which the foil undergoes during the calendering step should be excessive, for working reasons related to the nature of the polymer, and therefore being such as to compromise the embossing step efficiency.

The aforementioned tempering step, when provided, comprises, in turn, the option to detect at least one parameter of the surface temperature of the foil being produced and a second parameter indicative of the linear production rate. The heating intensity is controlled by feedback on the basis of the detected values.

Briefly, the process provides that surface temperature of the foil being produced is detected as a function of the type of thermoplastic material used and/or one parameter indicative of an aesthetic feature of the foil and, where required on the basis of such a detection, it provides for an intervention on the foil temperature (the surface or the whole sectional mass of the processed material) to compensate any undesired changes occurring in the aesthetic features of the end product.

According to the preferred embodiment of the inventive process, the embossing is carried out by means of at least one embossing roll opposed to the relative counter-roll. The foil being worked, coming from the extrusion head and calendering rolls, moves on between the two rolls of the embossing assembly. The pressure exerted on the foil by the embossing roll is adjusted on the basis of at least one parameter indicative of the aesthetics of the foil, for example on the basis of the depth degree of the finished foil.

In order to avoid that detrimental inner tensions for the foil during its cooling are generated, the process according to the present invention provides a special control on the temperature gradients of the same foil being produced both when entering the embossing step and when exiting the latter.

In particular, temperature detections of one or more portions of the entire width of the foil are provided both upstream and downstream the embossing area. The temperature values detected are compared with each other, and the temperature of one or more portions of the foil is adjusted (increased or decreased), if required, on the basis of this comparison. Thereby, the most even control possible is achieved on the different portions of the foil, and the extent of the residual inner tensions which are typically generated after the foils have been cooled with the conventional processes is minimized.

The present invention further relates to a plant for the production of embossed foils made of thermoplastic material according to claim 7.

In particular, the plant comprises an extruder arranged for the continuous production, in hot conditions, of a flow of extruded thermoplastic material, at least one assembly for cooling said foil and at least one embossing roll, and it is characterized in that said at least one embossing roll is arranged upstream the first cooling assembly relative to the movement direction of the foil, to emboss the foil exiting from the upstream machines.

The plant according to the present invention allows minimizing the energy consumptions compared to equally-sized conventional plants. The embossing of the weblike product is carried out when the product is still hot, i.e. when the product is at a temperature near the softening/tempering temperature. Thereby, it is prevented having to subsequently perform a new heating step of the unwound foils but, on the contrary, the embossing is carried out before the just embossed foils excessively cool down after exiting the extrusion head.

According to the preferred embodiment of the present invention, the plant further comprises a plurality of calendering rolls arranged between the extruder and the first embossing roll relative to the sliding direction of the foil. The calendering rolls, for example three rolls having a different surface finishing, rotatably operate on the foil exiting the extruder.

In order to maximize the plant versatility, the embossing and calendering rolls are, each, preferably provided with their own kinematics with a rotation mechanism that is independent of the operation of the other rolls. Thereby, it is possible to separately control the rotation rate of each roll and to alter this rate when required, in order to compensate undesired deviations from the working parameters, such as, for example, embossing degree, production rate, stretching/shrinking of the foils, etc. A special control unit provides for the adjustment of the rolls rotation rate.

The embossing rolls and the calendering rolls are thermo-conditioned, i.e. provided with systems intended to alter, in a controlled manner, the outer surface temperature of the rolls, i.e. the surface contacting the moving foil. Preferably, each roll comprises inner channelling systems for the forced circulation of a working diathermic fluid, that is adapted to quickly release or draw the working thermal energy. The working fluid is suitably heated or cooled outside the relative roll. The outer control unit provides for the adjustment of the fluid circulation so as to keep the temperature of each roll surface constant, independently of the other rolls temperature, within a range from 10°C to 140°C. The maximum temperature difference between the roll ends does not exceed 0.5°C in order to avoid transmitting irregular transversal temperature gradients to the rolls and the foil being worked, and in order to contain the onset of inner tensions for the thermoplastic material.

When the foil, along the path from the extruder to the first embossing roll, necessarily excessively cools down, i.e. if the temperature of the thermoplastic material should considerably decrease as compared with the softening temperature, with clear adverse repercussions on the embossing quality, the plant is provided with at least one surface tempering station of the foil being worked which has the task of increasing temperature of the foil, or at least the surface thereof, to the softening temperature.

The tempering station is located between the calendering rolls and the first embossing roll. For example, a tempering station comprises one or more lamps oriented so as to irradiate the surface of the foil being worked with emission at variable frequency and wavelength.

According to a preferred embodiment of the invention, the plant is provided with multiple thermo-conditioning stations, each active on a different length of the foil being worked.

The plant is provided with a feedback control of the foil heating/cooling, which allows the cooling of the foil being worked to be made even, before it is wound onto bobbins, thus minimizing the risks to generate inner tensions for the thermoplastic material of such extent as to cause distortions and/or impairment of the physical-mechanical features of the product.

The feedback control is carried out by equipping the plant with one or more sensors adapted to detect the surface temperature of the foil being worked, for example of different portions of the foil throughout the development thereof, both transversal and longitudinal. The signal provided by the sensor, or sensors, is processed, for example by the control unit, and on the basis of this processing, the lamps of the heating stations and/or the fans of cooling stations and/or the thermo-conditioning means of the rolls are activated. Thereby, the foil temperature is controlled throughout the development thereof, thus making the differences as much gradual as possible among the various portions.

The pressure which the embossing rolls and the calendering ones apply to the foil is independently adjustable for each roll. The rolls are rotatably supported by special hydraulic jacks operable such as to apply a pressure ranging between 80 and 1200 N/linear cm.

The process and plant according to the present invention have a number of advantages as compared with conventional technical solutions.

Firstly, the embossing is carried out on the foil prior to the final cooling provided for the winding onto bobbins. Thereby, the cooling of the foils before they are wound onto bobbins is prevented, along with the following unwinding and heating at the softening temperature which are provided with conventional processes and plants. In practice, the residual heat of the foil exiting the extrusion head is used in order to avoid having to bring the foil temperature back to the softening temperature starting from the cold foils. It is understood that the energy consumption of the plant is minimized. Furthermore the foils are wound onto bobbins one single time, and not twice such as provided by the known solutions, with clear time savings and productivity increase.

Secondly, the process and plant according to the present invention allow limiting the onset of detrimental inner tensions of the thermoplastic material of the foils as much as possible, i.e. tensions which are such as to cause defects or ruptures. The thermal conditioning of the foil being worked is feedback adjusted. The sensors detect the foil temperature in different points, for example at the outlet from the extruder, downstream the calendering rolls and downstream the embossing rolls, etc., and the control unit provides to heat one or more portions of the same foil, by means of the heating assemblies, so as to achieve, over time, a cooling as much even as possible of the foil, before the latter is wound onto bobbins. In other words, the control unit provides to activate the lamps for the foil heating so that the different portions of the foil, throughout the length thereof, may stay at a temperature not excessively different from the temperature of the adjacent portions.

A further advantage is given by the option of precisely adjusting the pressure applied by the embossing roll/s, on the foil being worked. Thereby, one can change the embossing degree as desired, i.e. the depth of the decoration impressed on the foil by the rolls, the engraving level of the die cylinder being equal.

The pressure is adjusted by the control unit acting on the hydraulic jacks which activate the embossing rolls. Alternatively, the axle base between the embossing rolls can be kept fixed and opposite, independently of the working pressure of the hydraulic jacks, thereby giving particular blurring effects on the end product. The benefits of a precise adjustment of the embossing pressure concern the versatility of the plant, which lends itself to quick changes as regards the type of the foils being worked.

Another advantage is given by the opportunity to rapidly replace the embossing roll when required for the production of foils with different aesthetical features. Preferably, the assembly comprising the embossing roll is modular. The embossing roll may be rapidly replaced with a roll having different features, both of surface pattern and mechanical diameter, without having to interrupt the extrusion and calendering steps of the foil.

Further aspects and advantages of the present invention will be more clearly understood from the description which follows, given by way of a non-limiting illustration with reference to the annexed schematic drawings, in which:
- Fig. 1 is a block diagram of a process according to the present invention;
- Fig 2 is a side view of a plant according to the present invention;
- Fig 3 is a top view of the plant shown in Figure 2.

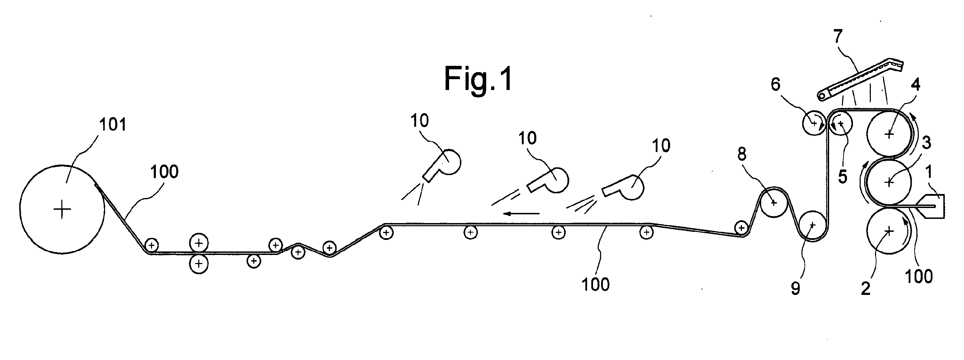

With reference to Fig. 1, a block diagram is shown of the process according to the present invention for the continuous production of thermoplastic material embossed foils.

A foil **100** in thermoplastic material is continuously produced by means of extrusion. The term "foil" is used by those skilled in the art to designate films, and, generally, continuously extruded, weblike products. The foil **100** is a weblike product having for example a thickness ranging between 0.1 mm and 4 mm exiting the head of an extruder **1.** The thermoplastic material may be of various types, as set forth above by way of non-limiting example, as a function of the end uses intended for the end product.

The foil **100** may be, for example, used as a coating material in the field of the manufacturing of furnishings or for the coating of artefacts in general, for the thermoforming of containers with aesthetical effects having a special nature, etc.

Preferably, the foil 100 is calendered immediately after the extrusion, when the thermoplastic material is at a temperature near the extrusion temperature. For example, a material extruded at a melt temperature characteristic of the worked polymer, undergoes a calendering operation carried out by the assembly of rolls **2**, **3**, and **4** at a temperature ranging between 10 and 140 °C.

The foil **100** is embossed when the thermoplastic material is still hot and its surface is at a temperature near the softening one. The embossing is carried out with one or more embossing rolls **6**. Advantageously, the process of the invention takes advantage of the heat of the foil **100** exiting from the machines upstream, thus avoiding that the same cools down excessively. Thereby, the heat provided to the material of the foil **100** during the extrusion and calendering step is used, thus avoiding a second heating of the foil **100** starting from room temperature in order to carry out the embossing, unlike what is provided in the known technique.

In some instances, when the surface temperature of the foil **100** is required to be brought near or equal to the softening temperature of the relative material prior to the embossing roll **6**, the process provides a tempering step, carried out at least on the surface to be embossed of the foil **100**. The extent of the heating, carried out for example with lamps **7** oriented so as to irradiate the foil **100** moving to the roll 6, is minimal, i.e. the tempering has the only task of increasing the temperature of the surface of the foil **100** by few Celsius degrees compared to the rest in order to optimize the embossing, not the task of heating the foil **100** throughout the thickness thereof.

The embossed foil **100** is gradually cooled before being wound onto bobbins **101**. The cooling is achieved by causing the foil **100** to interact with rolls **8**, **9**, cooled or thermo-adjusted by diathermic fluid forced circulation and/or, where required, directing air streams on the foil **100**, for example with axial fans **10**.

The graduality of the thus-achieved cooling allows minimizing the inner tensions of the foil thermoplastic material, for advantage of the end product strength and quality. The process provides the feedback control of the cooling. One or more detecting sensors or systems measure the temperature of the foil **100** during the step of winding onto bobbins as well as the pulling tension automatically adjusted as a function of predetermined working parameters.

After the foil **100** has been embossed with the desired pattern and in the desired degree, and after being gradually cooled, the same foil **100** is wound onto bobbins.

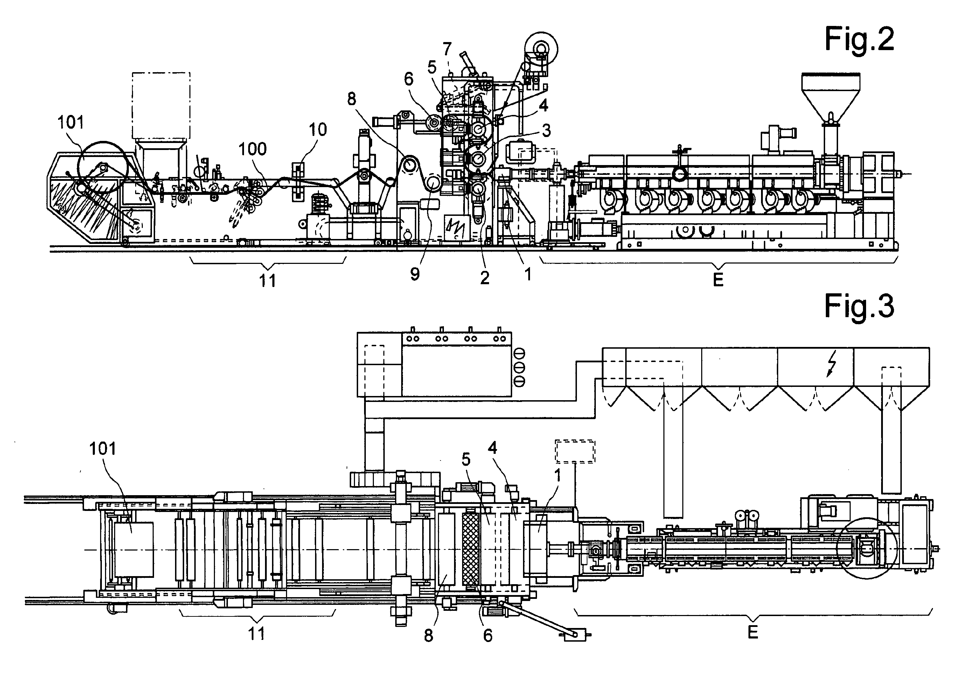

Figs. 2 and 3 show a plant according to the present invention, in a side and a top view, respectively.

The extruder used for the production of the foil **100** to be embossed is designated with the letter **E**. The extruder **E** may be of a conventional type, for example, a single-screw, or twin-screw, co-rotating or counter-rotating extruder, etc. The extruder **E** is fed with the thermoplastic material through special volumetric and/or gravimetric metering systems, and may be equipped with ancillary equipment, such as filter changers, volumetric pumps, static and/or dynamic mixers, etc.

Where needed by the nature or the features of the end product, the main extruder, independently of the type thereof, may be sided by one or more satellite co-extruders, thereby allowing for the production of multilayer articles, that can be similarly subjected to every treatment of aesthetic appearance (embossing, and following operations of ennoblement and/or surface finishing).

The thickness of the foil **100** is predetermined by the geometry of the outlet head of the extruder **E**, which may be changed in order to alter this thickness according to the requirements. In the embodiment shown in Figs. 2 and 3, the outlet mouth of the extruder **E** is linked to the flat head **1**, equipped with adjustment systems for the opening both in the vertical and in the horizontal orientation.

The foil **100** is continuously produced, i.e. it is in the form of a moving web pulled along the plant. Preferably, the foil **100** exiting the head **1** of the extruder undergoes a calendering process. The calendering is carried out by causing the foil **100** to pass between the calendering rolls **2**, **3**, and **4**. The rolls are preferably independently thermo-regulated and may exhibit a different degree of surface finishing. In the embodiment shown herein, each roll is provided with an independently rotating drive, comprising for example an alternating current gearmotor controlled by a vectorial inverter.

When the foil **100** interacts with the calendering rolls **2**, **3**, and **4**, the temperature of the thermoplastic material is near the extrusion temperature and undergoes a cooling process under controlled conditions.

In fact, the calendering rolls are located just downstream the head **1** of the extruder **E** relative to the movement direction of the foil **100**, and the cooling that the foil **100** undergoes in the intermediate length is minimal. In order to avoid an excessive cooling of the foil **100** during the calendering, the rolls **2**, **3**, and **4** are each provided with independent means for the adjustment of the temperature of the respective outer surface contacting the foil **100** (thermo-conditioning of the rolls). Preferably, this adjustment means comprise a circuit for the forced circulation of a thermal exchange fluid inside the roll. For example, the fluid allows adjusting the temperature of the outer surface of the roll **2**, **3**, or **4** within the range 10°C - 140°C, with temperature differences between the roll ends which are less than 1°C. The adjustment is controlled by a special outer control on the basis of the parameters selected for the current processing.

According to the preferred embodiment of the plant, also the clamping force of the rolls **2**, **3**, and **4** on the foil **100** is adjustable. The rolls **2**, and **4** are actuated by hydraulic jacks, whose working pressure is controlled by the control unit of the plant to alter the clamping force within the range 300 - 1200 N/linear cm, while the air gap between the central and lower rolls or between the central and upper rolls, respectively, is controlled by contact among sloping opposing wedges, sliding on translational/support guides.

After the foil **100** has left the last roll calendering **4**, the same foil **100** undergoes the embossing step actuated by means of the embossing roll **6** opposite the counter-roll **5**, which has the further task to pull the foil **100**. The counter- and pulling roll **5** is either made or coated with rubber resistant to high temperatures and to the typical abrasion/compressive phenomena of the embossing. The embossing roll **6** is preferably made in alloy and tempered steel, and exhibits a surface hardness above 52 - 54 HRC. The outer surface of the embossing roll **6** is engraved with the pattern to be printed on the surface of the foil **100**.

Both the embossing roll **6** and the counter-roll **5** are provided with the abovementioned thermo-conditioning means, i.e. means for the adjustment of the surface temperature. The temperature of the surface of the rolls **5**, **6** is adjusted by the control unit within the range of 10°C - 140°C, with variations between the ends of each roll which are less than 0.5°C.

The embossing roll **6** slides on tempered guides-constrained supports with possibility of axle base adjustment compared to the fixed counter-roll, in this way making the width of the gap between the respective outer surfaces variable, so as to apply the desired pressure on the foil **100** being worked or perform an embossing printing having the desired depth. Preferably, the roll **5** is actuated by hydraulic jacks to alter/adjust the pressure exerted by the roll on the foil **100** within the range of 100 - 1200 N/linear cm. By changing the range of the jacks it can be possible to further alter the distance between centers of the rolls, keeping the working pressure of the embossing roll constant, thus achieving special embossing degrees and/or desired esthetical effects.

Advantageously, the assembly comprising the embossing roll **6** is of a modular type. The roll **6** is arranged and mounted so as to be rapidly replaced by other embossing rolls which differ both in the finishing degree and in the mechanic diameter, at most without having to interrupt the extrusion step and the calendering step of the foil **100**.

Preferably, as shown in Fig. 2 and 3, the plant is provided with a tempering station 7, which has the function of bringing the temperature of the surface of foil **100** back to a value near or equal to the softening temperature. The heating is minimal, since the foil **100** is still hot after calendering, and it is not to be intended as equivalent to the heating which the foils undergo in conventional plants, which before being embossed have to be brought to the surface tempering starting from the room temperature. By way of non-limiting example, the foil **100** can leave the calendering roll **4** at a temperature equal to approximately 110°C (for example with PMMA) and the station 7 provides for the heating only of the surface of the foil to be embossed to the typical tempering temperature of the material of process.

The tempering station **7** comprises a plurality of lamps that are oriented so as to irradiate the surface of foil **100** which moves on under the same lamps. Irradiation intensity and duration are adjusted by the control unit. For example, irradiation intensity may be adjusted, in addition to the command/control electronic equipment, also by changing the distance of the lamps from the surface of the irradiated foil 100. The station 7 is preferably equipped with lamps, or anyhow radiation emitters, emitting radiations at different wavelengths (for example short and medium) and the irradiation intensity adjustment may also, as stated above, carried out by the control unit which activates the most suitable type of lamps. For example, it has been found that the penetration power into the thermoplastic materials usually used to make the foils is a function of the irradiation wavelength, and therefore the station **7** has been equipped with different wavelength sources as a function of the specific productive requirements.

The foil **100**, after being embossed, is pulled in contact with a plurality of cooling/conditioning rolls **8**, **9**, i.e. equipped with the abovementioned thermo-conditioning means of the respective surface temperature. The foil is pulled upon a following roller conveyor **11** in order to be wound onto a bobbin **101**. Special assemblies for the dragging of the foil **100** are provided.

The plant is equipped with a cooling station **10**, operated by the control unit, which has the function of completely cooling the foil **100** before the end winding onto the bobbin **101**. The cooling station comprises a plurality of fans oriented so as to direct air jets on the foil **100** being moved by the roller conveyor **11**.

The pulling assembly of the plant, i.e. the assembly comprising the rolls intended to keep the foil **100** moving, is provided with a control device of the tension power applied to the foil **100**. This device preferably comprises an "idle roll", active on the moving foil **100**, linked to a system adapted for providing a signal representative of the traction strength exerted on the foil **100** both by the puller and by the winder of the bobbin **101**.

Furthermore, the plant is equipped with one or more cutting assemblies which provide to cut the foil **100** edges, which may exhibit irregularities, prior to the winding, or in order to split the foil **100** in two or more strips having a preset width.

The plant may be further provided with a coupling device of a decorative/aesthetic film to the foil **100**. This device can be located upstream the tempering station **7** in order to continuously overlap the film to the foil **100**. The film-foil coupling may be achieved by carrying out the heating with the lamps.

The control unit receives signals originating from a plurality of sensors (not shown) located along the path of the foil **100** so as to detect, each of them, the surface temperature of foil **100** and/or a parameter indicative of the processing of the same foil. The control unit further receives a signal indicative of the type of thermoplastic material being fed to the extruder **E**.

The control unit processes the received signals and provides for the operation of the tempering station **7**, the adjustment means of the rolls **2-9** and the cooling station **10**, so that the thermal gradients of the material of the foil **100**, along the length thereof, are at a minimum. The cooling of the foil **100** is controlled so as to be gradual with time and along the length thereof. Thereby, the formation of detrimental inner tensions for the thermoplastic material following an uncontrolled and/or aggressive cooling is prevented. The control unit provides for the increasing or decreasing of the action of the tempering station **7**, of the adjustment means of the rolls **2-9** and of the cooling station **10** to compensate for optional undesired changes in the temperature of foil **100** as compared with the expected values.

The plant and process according to the present invention allow obtaining considerable energy savings as compared with conventional solutions.

## Claims

1. A process for the continuous production of embossed thermoplastic material foils, comprising the step of hot extruding, and continuously, a foil (100) of said thermoplastic material, the step of cooling the foil to wind it onto bobbins (101), and the step of at least partially embossing said foil, **characterized in that** the embossing step is carried out on the hot extruded material, before cooling.

2. The process according to claim 1, **characterized by** subjecting said foil (100) to one or more calendering steps before the embossing step.

3. The process according to any preceding claim 1 to 2, **characterized by** a step of surface tempering the foil, prior to the embossing step, in order to bring at least one part of the surface thereof to be embossed at a temperature near or equal to the softening temperature of said thermoplastic material.

4. The process according to claim 3, **characterized in that** the tempering step comprises the step of detecting at least one parameter of the foil (100) under production that is selected from: surface temperature, type of thermoplastic material, thickness of embossed foil, embossing degree, surface roughness of the foil, and the step of controlling by feedback the heating intensity on the basis of the detected value of said at least one parameter.

5. The process according to any preceding claim 1 to 4, in which the foil (100) passes between an embossing roll (6) and the relative counter-roll (5), **characterized in that** the pressure exerted by said embossing roll (6) on the foil (100) is adjusted by feedback on the basis of the detected value of said at least one parameter.

6. The process according to any preceding claim 1 to 5, **characterized by** the steps of detecting the temperature of a first portion of said foil and the temperature of a second portion of said foil, downstream the first compared to the working direction, comparing the detected temperature values and increasing/decreasing the temperature of one or more portions of said foil (100) when needed on the basis of said comparison, in order to minimize the temperature gradients among said portions.

7. A plant for the continuous production of thermoplastic material embossed foils, comprising an extruder (E) arranged for producing a foil (100) of said material, at least one assembly (8, 9, 10) for the heating/cooling of said foil and at least one embossing roll (6), **characterized in that** said at least one embossing roll (6) is located upstream the first cooling assembly (10), relative to the movement direction of the foil (100), in order to emboss at least a part of the foil surface, in the softened state, exiting said extruder (E).

8. The plant according to claim 7, **characterized by** further comprising one or more calendering rolls (2-4) located between the extruder (E) and the at least one embossing roll (6) in order to calender the still hot foil (100) exiting said extruder (E).

9. The plant according to claim 7 or claim 8, **characterized in that** each embossing roll (6) and/or each calendering roll (2-4) is provided with an independent rotation drive.

10. The plant according to any claim 7 to 9, **characterized in that** each embossing roll (6) and/or each calendering roll (2-4) is provided with means for the independent adjustment of the outer surface temperature.

11. The plant according to any preceding claim 7 to 10, **characterized by** further comprising at least one tempering station (7) of the surface of the foil being worked, located between the calendering rolls (2-4) and the at least one embossing roll (6), comprising means to heat at least part of the foil surface until reaching the softening temperature of the thermoplastic material.

12. The plant according to claim 11, **characterized in that** said heating station (7) comprises:
- one or more lamps arranged for irradiating the foil surface (100) being worked with emission at a variable frequency and intensity,
- at least one sensor of at least one parameter of the foil selected from its surface temperature, thermoplastic material type, embossing degree of the foil, foil surface roughness, foil thickness, and
- means for processing the signal provided by said sensor and adjusting the irradiation frequency and intensity on the basis of said processing.

13. The plant according to claim 12, **characterized by** comprising radiation emitters at two or more different wavelengths and means for adjusting the irradiation intensity of said emitters at different wavelengths.

14. The plant according to claim 12, **characterized by** comprising radiation emitters at two or more different wavelengths and means for activating/deactivating the irradiation of one or more of said emitters at different wavelengths.

15. The plant according to any preceding claim 7 to 14, **characterized in that** said at least one embossing roll (6), and/or each of said calendering rolls (2-4), is provided with independent pushing means on the foil being worked.

16. The plant according to the claim 15, **characterized in that** said pushing means comprise hydraulic jacks and the pressure acting on the respective roll is variable in a range from 80 to 1200 N/linear cm.

17. The plant according to any preceding claim 7 to 16, **characterized in that** said at least one cooling assembly (10) comprises axial fans arranged for directing air jets towards the moving foil (100).
